Europäisches Patentamt

European Patent Office

Office européen des brevets

(11) Veröffentlichungsnummer : **0 060 533**
**B1**

# EUROPÄISCHE PATENTSCHRIFT

(45) Veröffentlichungstag der Patentschrift :
30.11.88

(21) Anmeldenummer : 82102014.6

(22) Anmeldetag : 12.03.82

(51) Int. Cl.⁴ : **G 01 N 27/56**

(54) **Elektroanalytische Messanordnung.**

(30) Priorität : 13.03.81 HU 63981

(43) Veröffentlichungstag der Anmeldung :
22.09.82 Patentblatt 82/38

(45) Bekanntmachung des Hinweises auf die Patenterteilung : 30.11.88 Patentblatt 88/48

(84) Benannte Vertragsstaaten :
AT CH DE FR GB LI SE

(56) Entgegenhaltungen :
DE-A- 2 908 719
DE-A- 3 033 680

(73) Patentinhaber : RADELKIS Elektrokémiai Müszergyárto Szövetkezet
Laborc u. 1
H-1300 Budapest (HU)

(72) Erfinder : Daròczy, János, Dipl.-Ing.
Vöröshadsereg utja 26
H-1021 Budapest (HU)
Erfinder : Erdélyi, János, Dipl.-Ing.
Zalai ut 4/c
H-1125 Budapest (HU)
Erfinder : Havas, Jenö, Dr. Dipl.-Ing.
Remetehgyi ut 32
H-1037 Budapest (HU)
Erfinder : Kecskés, Lajos, Dipl.-Ing.
Remetehegyi ut 32
H-1037 Budapest (HU)
Erfinder : Müller, Henrik, Dipl.-Ing.
Péterhegyi köz 54
H-1112 Budapest (HU)
Erfinder : Nyirö, Katalin
Kassai tér 22
H-1142 Budapest (HU)
Erfinder : Takás, Ferenc
Naphegy u. 59
H-1016 Budapest (HU)

(74) Vertreter : Füchsle, Klaus, Dipl.-Ing. et al
Hoffmann . Eitle & Partner Patentanwälte Arabellastrasse 4
D-8000 München 81 (DE)

**Beschreibung**

Die Erfindung betrifft eine elektroanalytische Meßvorrichtung mit mindestens einer Meßzelle und einer elektronischen Signalbearbeitungseinheit zur Bestimmung der Ionenaktivität von in Ruhe befindlichen oder strömenden Lösungen.

Es ist bekannt, daß die Meßgröße (z. B. Membranpotential), gemessen mit einem herkömmlicherweise gestalteten elektroanalytischen Element (z. B. an einer ionselektiven Membrane) nicht nur durch die entsprechenden elektrochemischen Parameter der gemessenen Probe bestimmt wird, sondern auch beeinflußt wird durch die Materialqualität, die Geometrie, gegebenenfalls das Maß der Verunreinigung des Grundmaterials des ionenselektiv permeablen Elementes. Ferner spielt auch das « Alter » des ionenselektiv permeablen Elementes (berechnet von der Herstellung), usw. eine Rolle. Infolgedessen entsteht also die Meßgröße im Laufe der Messung als Resultierende der obigen Faktoren. Daraus folgt, daß man aus der zu messenden elektrochemischen Parameterveränderung (z. B. aus der Senkung oder Erhöhung der Ionkonzentration) die Meßgrößeänderung durch den Zustand des ionenselektiv permeablen Elementes aufgrund der oben erwähnten Störeffekte nicht unterscheiden kann.

Bei herkömmlichen Meßverfahren (Kalibrierung, Standard-Addition, Konstantionstärke-Einstellung, Steilheit-Programmierung, usw.) besteht nicht das Bestreben, die Bestimmung der aus diesen Störungen stammenden Fehlsignale durchzuführen. (Siehe z. B. Havas : Ion- und molekulselektive Elektrode in biologischen Systemen, Neue Ergebnisse der Chemie/Akademischer Verlag, 1980, Seiten 80-87). Bei den bisher bekannten Verfahren wird vielmehr die zu bestimmende Probe mit einem oder mehreren Fluiden bekannter Zusammensetzung (Standardlösung oder Gas) über die entsprechenden elektrochemischen Parameter verglichen. Das bedeutet, daß vor der Messung die elektronischen Parameter des Meßgerätes und die elektrochemischen Parameter der Meßzelle durch entsprechende Betätigungsorgane verglichen bzw. abgestimmt werden müssen. Diese Operation wird allgemein als Anpassung bezeichnet.

Wegen der unkontrollierbaren Unbestimmbarkeiten der Erscheinung dieser Störungen hängt die Genauigkeit der Messungen davon ab, wie oft eine Anpassung oder mehrere Anpassungen vorgenommen werden müssen. Bei Präzisionsmessungen mit Kontroll-Charakter muß vor der Messung die Anpassung in irgendwelcher Weise durchgeführt werden. Wird diejenige Zeit betrachtet, die zum Durchspülen der Meßzelle aufgewendet werden muß, so ergibt sich, daß die Gesamtzeit der Analyse — im Falle der Anwendung von zwei Standardfluidenhäufig dem Fünffachen der effektiven Meßzeit entspricht. Obwohl durch die in der Elektroanalyse in breitem Maße verwendete « Anpassung durch einen Punkt » diese Zeit ungefähr auf die Hälfte gesenkt werden kann, ergibt sich aber ein unvermeidbarer Fehler, der durch die Änderung der Steilheit der Meßzellenansprechsignalfunktion (das sog. « slope ») während der Messung verursacht wird.

Aufgrund der obigen Ausführungen ist evident, daß die Gesamtzeit von Präzisierungsanalysen — wegen der zwangsläufig zwischen den effektiven Messungen eingefügten Anpassungsoperationen — äußerst lang ist. Kontinuierlich und gleichzeitig sind genügend genaue Messungen nicht möglich, da die Art und Weise des Aufbaues der Meßzellen die Bestimmung der Fehlersignale im Laufe der Messung nicht ermöglicht, wodurch eine Anpassung im Laufe der Messung nicht durchgeführt werden kann.

Aufgabe der Erfindung ist es, bei einer elektroanalytischer Meßvorrichtung der eingangs genannten Art die charakterischen Parameter der individuellen Eigenschaften des ionenselektiv permeablen Elementes, das in der elektroanalytischen Meßzelle angeordnet ist (z. B. Standardpotential, Steilheit der Antwortfunktion) zu ermitteln bzw. die Änderungen dieser Parameter auch im Laufe der Messung zu verfolgen und auf diese Weise zu kompensieren.

Diese Aufgabe wird erfindungsgemäß durch die Merkmale des Anspruchs 1 gelöst. Die Meßanordnung gemäß der Erfindung bietet die nachstehenden wesentlichen Vorteile, die in folgender Weise zusammengefaßt werden :

Es wird die Beobachtung der elektrochemischen Parameter des ionenselektiv permeablen Elementes im Laufe der Messung ermöglicht.

Durch Anwendung der Erfindung kann die Anpassungsoperation im Verlaufe der Messung durchgeführt werden.

Das Meßergebnis wird völlig unabhängig von denjenigen Störungsfehlern, die aus den Veränderungen der elektrochemischen Parameter des ionenselektiv permeablen Elementes stammen.

Der Strömungspotentialfehler wird völlig beseitigt.

Die Anwendung der Erfindung setzt den störenden Effekt der Diffusionspotentiale in großem Maße herab.

Kontinuierliche oder stufenweise Meßvorgänge können im Vergleich mit den bisherigen Methoden mit bedeutend höherer Genauigkeit durchgeführt werden.

Die Gesamtzeit der Analyse wird bedeutend abgekürzt.

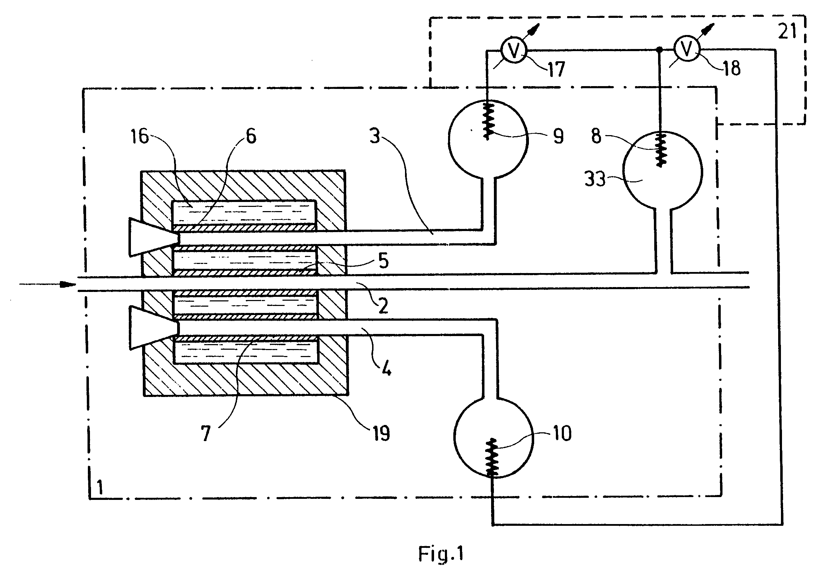

Vorteilhafte Weiterbildungen der Erfindung sind durch die abhängigen Ansprüche gekennzeichnet. Eine elektroanalytische Meßvorrichtung, die im Sinne der Erfindung aus einer integrierten ionenselektiv permeablen Element-Anordnung und aus mehreren Bezugselektroden besteht, wird nachstehend an zwei Ausführungsbeispielen anhand der Figuren 1 bis 3 erläutert.

Fig. 1 zeigt eine Meßvorrichtung die aus einer integrierten ionenselektiv permeablen Element-Anordnung und aus drei Bezugselektroden besteht und eine zur Messung des pH-Wertes dienende Meßzelle beinhaltet.

Wie es aus Fig. 1 hervorgeht, ist in der Meßzelle 1 ein ionenselektives Element 5, das eine aus einem pH-empfindlichen Glas ausgebildete Mikrokapillare ist, über die Proben-Lösung 2 mit dem inneren Elektrolyt 33 der Bezugselektrode 8 an der Seite der Proben-Lösung 2 verbunden. In der Meßzelle 1 ist auch ein ionenselektiv permeables Element 6, angeordnet, das in analoger Weise zum ionenselektiv permeablen Element 5 hergestellt ist. Dieses Element 6 ist über eine erste pH-Standardlösung 3 mit der ersten Standard-Bezugselektrode 9 verbunden. Ähnlich zu diesem ist das ionenselektiv permeable Element 7 über eine zweite pH-Standardlösung 4 mit der zweiten Standard-Bezugselektrode 10 verbunden. Die galvanische Verbindung zwischen den in der Meßzelle 1 angeordneten, aus $H^-$-Ionen-empfindlichem Glas ausgebildeten Mikrokapillaren der ionenselektiv permeablen Elemente 5, 6 und 7 ist durch den Elektrolyt 16 gesichert. Die Elemente 5, 6 und 7 bilden mit dem Elektrolyt zusammen eine integrierte ionenselektiv permeable Element-Anordnung 19. Die elektronische Signalverarbeitungseinheit 21 ist an den Bezugselektroden 8, 9 und 10 der Meßzelle 1 in der Weise angeschlossen, daß ein erster Meßkreis 17 an der ersten Standard-Bezugselektrode 9 und an der Proben-Bezugselektrode 8, und ein zweiter Meßkreis 18 an der zweiten Standard-Bezugselektrode 10 und an der Proben-Bezugselektrode 8 angeschlossen ist.

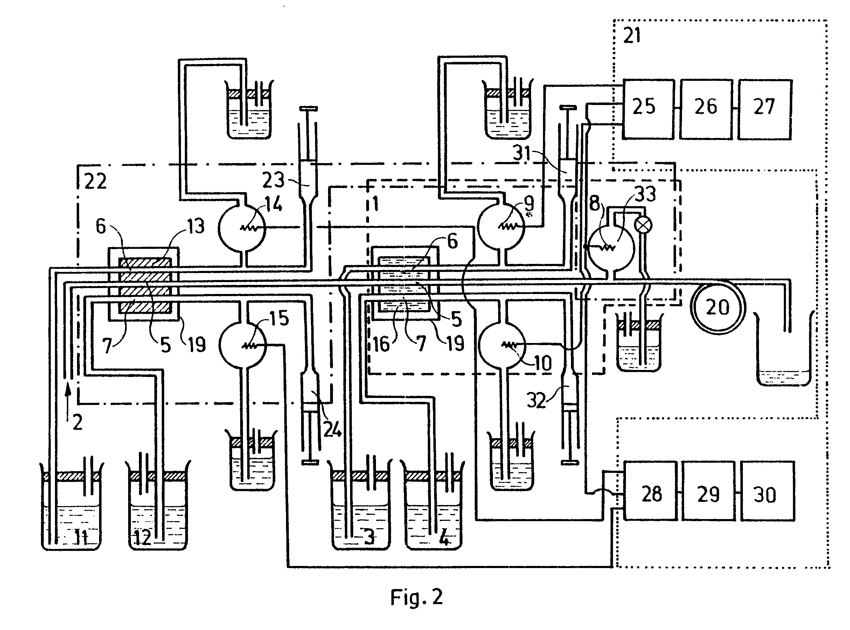

Fig. 2 zeigt eine Meßanordnung, bei welcher $Na^+$-Ionen- und $K^+$-Ionen-empfindliche — miteinander über die Proben-Lösung in galvanischer Verbindung stehende und mit einer gemeinsamen Proben-Bezugselektrode versehene — integrierte Fühler und Bezugselektrode aufweisende Meßzellen vorhanden sind.

Die in Fig. 2 dargestellte Meßzelle 1 ist $Na^+$-Ionen-empfindlich und zur Meßzelle gemäß Fig. 1 völlig analog ausgebildet, mit dem Unterschied, daß die mikrokapillaren ionenselektiv permeable Elemente 5, 6 und 7 nicht aus $H^+$-Ionen empfindlichem, sondern aus $Na^+$-Ionen empfindlichem Glas hergestellt sind und daß die erste Standardlösung 3 und die zweite Standardlösung 4 keine $H^+$-Ionen-empfindliche Lösung, sondern eine $Na^+$-Ionen-empfindliche Standard-Lösung ist.

Die Meßvorrichtung gemäß Fig. 2 enthält außer der $Na^+$-Ionen-empfindlichen Meßzelle 1 auch eine zweite $K^-$-Ionen-empfindliche Meßzelle 22, deren Proben-Bezugselektrode mit der Proben-Bezugselektrode 8 der Meßzelle 1 identisch ist. In der Meßzelle 22 sind drei mit der Proben-Lösung 2 und mit der ersten $K^+$-Ionen-empfindlichen-Standardlösung 11 und der zweiten $K^+$-Ionen-empfindlichen Standardlösung 12 in Berührung stehende, mikrokapillare ionenselektiv permeable Elemente 5, 6 und 7 aus einem einzigen chemisch-homogen gestalteten Elektroden-Körper 13 ausgebildet. Der Elektroden-Körper 13 bildet mit den in ihm ausgebildeten ionenselektiv permeablen Elementen 5, 6 und 7 eine integrierte Element-Anordnung 19. In der $K^+$-Ionen-empfindlichen Meßzelle 22 steht mit der ersten $K^+$-Ionen-empfindlichen Standardlösung 11 die erste $K^+$-Standard-Bezugselektrode 14 in Berührung. Ähnlich hierzu ist die zweite $K^+$-Ionen-empfindliche Standardlösung 12 mit der zweiten $K^+$ Standard-Bezugselektrode 15 in Berührungsverbindung.

Die $Na^-$-Ionen-empfindliche Meßzelle 1 ist über die Proben-Bezugselektrode 8 wie auch über die Standard-Bezugselektroden 9 und 10 an den Eingang des $Na^-$-Ionen-Meßverstärkers 25 der elektronischen Verarbeitungseinheit 21 angeschlossen, dessen Ausgang über eine Recheneinheit 26 an eine Anzeigeeinheit angeschlossen ist (für die Anzeige der $Na^+$-Ionen-Konzentration).

Ähnlich zu dieser Anordnung ist die $K^-$-Ionen-empfindliche Meßzelle 22 über die Proben-Bezugselektrode 8, und auch über die $K^+$-Ionen-empfindliche Standard-Bezugselektroden 14 und 15 an den Eingang des Meßverstärkers der elektronischen Signalbearbeitungseinheit 21 angeschlossen, dessen Ausgang über die arithmetische Einheit an die Anzeigeeinheit 30 angeschlossen ist (für die Anzeige der $K^-$-Ionen-Konzentration).

Darüber hinaus ist die Probenlösung 2 mit der peristaltischen Pumpe 20 verbunden und sind die Standardlösungen 11, 12, 3 und 4 in Reihe mit den Flüssigkeitsförderern 23, 24, 31 und 32 verbunden.

Die Meßvorrichtung gemäß Fig. 1 arbeitet wie folgt :

Die $H^-$-Ionen-empfindliche Meßzelle 1 besitzt ionenselektiv permeable Elemente 5, 6 und 7, die praktisch äquipotentiell sind, weil zwischen diesen der Elektrolyt 16 einen galvanischen Anschluß hervorruft. Die Elemente 5, 6 und 7 sind in chemischer und in mechanischer Hinsicht so aufgebaut, daß sowohl ihre Gestaltung, als auch ihr Verhalten völlig gleich sind. Dadurch sind das sich bildende Standardpotential und die in bezug auf die Empfindlichkeit charakteristische Ansprechfunktionssteilheit (« slope ») im wesentlichen gleich. Die Spannung, gemessen zwischen zwei ausgewählten Elektroden der Proben-Bezugselektrode und den Standard-Bezugselektroden 9, 10 ist praktisch unabhängig von den an den Elementen 5, 7 und 6 entstandenen Standardpotentialen, und auch von ihren unverwünschten Änderungen. Die Größe der elektromotorischen Kraft, gemessen zwischen den Standard-Bezugselektroden 9 und 10, beinhaltet im Falle einer Proben-Lösung 2 mit auswählbarem pH-Wert, die Information der Ansprechfunktionssteilheit (« slope »), die der Empfindlichkeit der Elemente 5, 6 und 7 entspricht, vorausgesetzt, daß die pH-Werte der ersten $H^-$-Ionen-empfindlichen Standardlösung 3 und der zweiten $H^-$-Ionen-empfindlichen Standardlösung 4 voneinander verschieden sind. Im Sinne der obigen Ausführungen kann der pH-Wert durch Messung der Spannung zwischen den Bezugselektroden 8, 9 und 10 der Meßzelle durch Messung von zwei beliebigen Spannungswerten berechnet werden, daß dieser Wert von dem an den Elementen bzw. Elektroden 5, 6 und 7 auftretenden Standardpotential nicht abhängt, und daß es von dem aktuellen Wert der Ansprechfunktionssteilheit (« slope »), die für die Empfindlichkeit charakteristisch ist, auch nicht abhängig ist, so daß die im Laufe der Messung zustandekommenden Änderungen, die vor der Schaffung der Erfindung Meßfehler verursacht haben, bei dem erfindungsgemäßen Verfahren keine Wirkung zeigen.

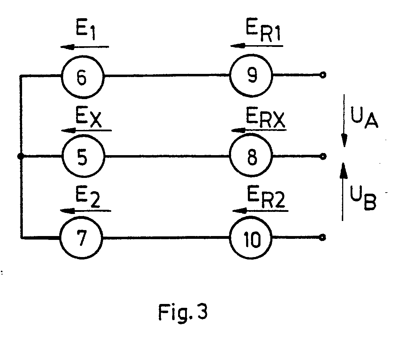

Fig. 3 erleichtert die Verständlichkeit der Berechnung des gesuchten pH-Wertes ($H^+$-Ionen-Empfindlichkeit).

Fig. 3 ist eine elektrische Ersatz-Darstellung der Meßzelle 1 gemäß Fig. 1. Die Formel, die zur Berechnung des pH-Wertes dient, wird für den Fall empfohlen, bei dem entsprechend der Fig. 1 zwischen der Proben-Bezugselektrode 8 und der Standard-Bezugselektrode 9, bzw. zwischen der Proben-Bezugselektrode 8 und der zweiten Standard-Bezugselektrode zwei Spannungen ($U_A$ ; $U_B$) gemessen werden und der gesuchte pH-Wert aus diesen Daten berechnet wird.

$$pH_x = \frac{pH_1(U_{Bx} - U_{B2}) - pH_2(U_{Ax} - U_{Al})}{(U_{Bx} - U_{B2}) - (U_{Ax} - U_{Al})}$$

dabei ist :

$pH_x$ = der gesuchte pH-Wert der Proben-Lösung 2

$pH_1$ = der pH-Wert der ersten $H^+$-Ionen-empfindlichen bzw. pH-Standardlösung 3

$pH_2$ = der pH-Wert der zweiten Standardlösung 4

$U_{Ax}$ = die zwischen der Proben-Bezugselektrode 8 und der ersten Standard-Bezugselektrode 9 meßbare Spannung, falls das Element 5 mit dem Probenlösung 2 gefüllt ist

$U_{Bx}$ = die Spannung zwischen der Proben-Bezugselektrode 8 und der zweiten Standard-Bezugselektrode, falls das Element 5 mit der Probenlösung 2 gefüllt ist,

$U_{A1}$ = die bei der « Anpassung » gemessene Spannung zwischen den Proben-Elektrode 8 und der ersten Standard-Bezugselektrode, falls das Element 5 mit der ersten $H^+$-Ionen-empfindlichen bzw. pH-Standardlösung 3 gefüllt ist,

$U_{B2}$ = die bei der Anpassung erhaltene Spannung zwischen den Proben-Bezugselektrode 8 und der zweiten Standard-Bezugselektrode 10 falls das Element 5 mit der zweiten $H^+$-Ionen empfindlichen bzw. pH Standardlösung 4 gefüllt ist.

Wie aus der Gleichung ersichtlich, ist die erforderliche Anpassungshäufigkeit nicht durch die Elemente 5, 6 und 7, sondern ausschließlich nur über die Bezugselektroden 8, 9 und 10 bzw. durch die Stabilität derjenigen Referenz-Potentiale bestimmt, die auf diesen erscheinen.

Die Schaltungsanordnung gemäß Fig. 2 funktioniert wie folgt :

Die $Na^+$-Ionen-empfindliche Meßzelle 1 und die $K^+$-Ionen-empfindliche Meßzelle 22 sind so gestaltet, daß an diesen Zellen im Sinne der Fig. 3 je zwei Spannungen ($U_{Ax}$ ; $U_{Bx}$) gemessen und bei der Berechnung nach der obigen Funktion der pNa-Wert bzw. der pK-Wert des Musters erhalten wird. Das berechnete Meßergebnis hängt praktisch weder von dem Standardpotential der ionenselektiv permeablen Elemente, noch vom aktuellen Wert der Ansprechfunktionssteilheit ab, so daß das Meßergebnis von den Änderungen im Laufe der Messung unabhängig ist. Der Elementkörper 13 enthält keine Elektrolyt-Lösung, weil zwischen den Elementen 5, 6 und 7 die galvanische Verbindung durch ihr eigenes Material sichergestellt ist.

Die Meßvorrichtung gemäß Fig. 2 bietet viel mehr, weil die die integrierten Element-Anordnung (siehe Fig. 1) enthaltende Meßzelle bzw. die Meßanordnung dieser Gestaltung verdoppelt wird.

Die peristaltische Pumpe 20 ermöglicht eine kontinuierliche Messung, usw. mittels der in die Strömung eingebrachten Proben-Lösung. Die Störwirkung der Strömungspotentiale können dadurch beseitigt werden, daß die Flüssigkeitsförderer 23, 24, 31 und 32 die Standardlösungen 3, 4, 11 und 12 mit einer ähnlichen Geschwindigkeit, wie die Probenlösung strömt, bewegt werden.

In dem geschilderten Beispiel werden die Störeffekte der Diffusionspotentiale derart beseitigt, daß die inneren Elektrolyte der Bezugselektroden 9, 10, 14 und 15 mit den Standardlösungen 3, 4, 11 und 12 versehen werden, wobei die Zusammensetzung des inneren Elektrolyts 33 der Proben-Bezugselektrode 8 in bezug auf die allgemeine Zusammensetzung der zu messenden Proben-Lösung ähnlich ist.

Bei der Meßvorrichtung gemäß der Figur hat die betätigende Person nicht die Aufgabe, die gesuchten, für die Probenlösung charakteristischen Werte aus den gemessenen Spannungswerten zu berechnen, weil diese bei der Anpassung der Recheneinheiten 26 und 29 aus den gemessenen und gespeicherten Werten $U_{A1}$ und $U_{B2}$ ausgerechnet werden. Eine weitere evidente Möglichkeit besteht darin, daß die arithmetischen Einheiten nicht nur die pNa-Werte und die pK-Werte ausrechnen, sondern auch unmittelbar die Konzentrationswerte :

$$c_x = \exp_{10} \frac{\lg c_1(U_{Ex} - U_{B2}) - \lg c_2(U_{Ax} - U_{Al})}{(U_{Ex} - U_{B2}) - (U_{Ax} - U_{Al})}$$

**Patentansprüche**

1. Elektroanalytische Meßvorrichtung zur Bestimmung der Ionen-Aktivität von strömenden oder nichtströmenden Proben-Lösungen mit mindestens einer Meßzelle (1 bzw. 22) und einer elektronischen Signalverarbeitungsvorrichtung (17, 18, 21 ; 25 bis 30), dadurch gekennzeichnet,

daß die Meßzelle (1 bzw. 22) ein erstes, mit der Proben-Lösung (2) in Berührung stehendes ionenselektiv permeables Element (5), ein zweites, mit einer ersten Standard-Lösung (3) in Berührung stehendes ionenselektiv permeables Element (6) und ein drittes, mit einer zweiten Standard-Lösung (4) in Berührung stehendes ionenselektiv permeables Element (7) aufweist,

daß die drei ionenselektiv permeablen Elemente (5, 6, 7) hinsichtlich ihrer Ionenselektivität ähnliches oder gleiches elektrochemisches Verhalten aufweisen und derart galvanisch miteinander verbunden sind, daß sie praktisch äquipotential sind, und

daß die Proben-Lösung (2) mit einer Proben-Bezugselektrode (8), die erste Standard-Lösung (3) mit einer ersten Standard-Bezugselektrode (9) und die zweite Standard-Lösung (4) mit einer zweiten Standard-Bezugselektrode (10) galvanisch verbunden ist, wobei die einzelnen Bezugselektroden (8, 9, 10) jeweils eine Signalverbindung zur elektronischen Signalverarbeitungsvorrichtung (17, 18, 21 ; 25 bis 30) aufweisen.

2. Elektroanalytische Meßvorrichtung nach Anspruch 1, dadurch gekennzeichnet, daß die ionenselektiv permeablen Elemente (5, 6, 7) aus ionenempfindlichem Glas bestehende Mikrokapillaren sind.

3. Elektroanalytische Meßvorrichtung nach Anspruch 1 oder 2, dadurch gekennzeichnet, daß zwischen der Proben-Lösung (2) und der Proben-Bezugselektrode (8) sowie zwischen den Standard-Lösungen (3, 4) und deren Standard-Bezugselektroden (9, 10) jeweils ein innerer Elektrolyt (33) vorgesehen ist.

4. Elektroanalytische Meßvorrichtung nach einem der vorhergehenden Ansprüche, gekennzeichnet, durch Mittel (20, 23, 24, 31, 32), durch die die erste und/oder zweite Standard-Lösung (3, 4 ; 11, 12) kontinuierlich oder stufenweise durch das zugeordnete ionenselektiv permeable Elemente (6, 7) bewegt werden kann.

5. Elektroanalytische Meßvorrichtung nach einem der vorhergehenden Ansprüche, dadurch gekennzeichnet, daß für die galvanische Verbindung der drei ionenselektiv permeablen Elemente (5, 6, 7) untereinander ein Elektrolyt (16) vorgesehen ist.

6. Elektroanalytische Meßvorrichtung nach einem der vorhergehenden Ansprüche 1 bis 4, dadurch gekennzeichnet, daß die drei ionenselektiv permeablen Elemente (5, 6, 7) Bestandteil eines elektrochemisch homogenen Körpers (13) sind.

7. Elektroanalytische Meßvorrichtung nach einem der vorhergehenden Ansprüche, dadurch gekennzeichnet, daß die Proben-Lösung (2) und die erste und zweite Standard-Lösung (3, 4) $H^+$-Ionen oder $Na^+$-Ionen oder $K^+$-Ionen aufweisen.

8. Elektroanalytische Meßvorrichtung nach einem der vorhergehenden Ansprüche, dadurch gekennzeichnet, daß die Zusammensetzung der inneren Elektrolyten (33) zwischen den betreffenden Proben- und Standard-Bezugselektroden (8, 9, 10) gleich oder nahezu gleich der Zusammensetzung der betreffenden Proben-Lösung (2) und der Standard-Lösung (3, 4) ist.

9. Elektroanalytische Meßvorrichtung nach einem der vorhergehenden Ansprüche, dadurch gekennzeichnet, daß wenigstens zwei miteinander über die Proben-Lösung (2) in galvanischer Verbindung stehende Meßzellen (1 und 22) vorhanden sind, denen eine mit der Proben-Lösung (2) in Berührung stehende Proben-Bezugselektrode (8) gemeinsam ist.

10. Elektroanalytische Meßvorrichtung nach einem der vorhergehenden Ansprüche, dadurch gekennzeichnet, daß die mindestens eine Meßzelle (1, 22) für den jeweiligen Meßwert und zur Fehlerkompensation eine elektronische signalverarbeitende Einheit (21) mit einer Recheneinheit (26, 29) aufweist.


## Claims

1. Electroanalytical measuring device for determining the ion activity of flowing or non-flowing sample solutions, comprising at least one measuring cell (1 or 22) and an electronic signal processing device (17, 18, 21 ; 25 to 30), characterised in

that the measuring cell (1 or 22) comprises a first ion-selective permeable element (5) which is in contact with the test solution (2), a second ion-selective permeable element (6) which is in contact with a first standard solution (3) and a third ion-selective permeable element (7) which is in contact with a second standard solution (4),

that the three ion-selective permeable elements (5, 6, 7) behave in an electrochemically similar or identical manner in terms of their ion-selectivity and are so galvanically connected to one another that they are virtually equipotential, and

in that the test solution (2) is galvanically connected to a test reference electrode (8), the first standard solution (3) is connected to a first standard reference electrode (9) and the second standard solution (4) is connected to a second standard reference electrode (10), the individual reference electrodes (8, 9, 10) having in each case a signal connection to the electronic signal processing device (17, 18, 21 ; 25 to 30).

2. Electroanalytical measuring device according to Claim 1, characterised in that the ion-selective permeable elements (5, 6, 7) are microcapillaries which consist of ion-sensitive glass.

3. Electroanalytical measuring device according to Claim 1 or 2, characterised in that between the test solution (2) and the test reference electrode (8) as well as between the standard solutions (3, 4) and their standard reference electrodes (9, 10), there is in each case an internal electrolyte (33).

4. Electroanalytical measuring device according to one of the preceding Claims, characterised by means (20, 23, 24, 31, 32) by which the first and/or second standard solution (3, 4, 11, 12) can be moved continuously or in stepwise fashion by the associated ion-selective permeable element (6, 7).

5. Electroanalytical measuring device according to one of the preceding Claims, characterised in that for the galvanic connection of the three ion-selective permeable elements (5, 6, 7) to one another an electrolyte (16) is provided.

6. Electroanalytical measuring device according to one of the preceding Claims 1 to 4, characterised in that the three ion-selective permeable elements (5, 6, 7) are a constituent part of an electrochemically homogeneous body (13).

7. Electroanalytical measuring device according to one of the preceding Claims, characterised in that the test solution (2) and the first and second standard solution (3, 4, 5) comprise $H^-$-ions or $Na^-$-ions or $K^-$-ions.

8. Electroanalytical measuring device according to one of the preceding Claims, characterised in that the composition of the inner electrolytes (33) between the relevant test and standard reference electrodes (8, 9 and 10) is the same or is virtually the same as the composition of the relevant test solution (2) and the standard solution (3, 4).

9. Electroanalytical measuring device according to one of the preceding Claims, characterised in that at least two measuring cells (1 and 22) which are in galvanic communication with each other via the test solution (2) are provided, and in that common to them is a test reference electrode (8) which is in contact with the test solution (2).

10. Electroanalytical measuring device according to one of the preceding Claims, characterised in that the at least one measuring cell (1, 22) comprises an electronic signal processing unit (21) with a computing unit (26, 29) for the relevant measured value and for the compensation of errors.

**Revendications**

1. Appareil d'analyse électrochimique pour déterminer l'activité ionique de solutions-échantillons en écoulement ou non en écoulement avec au moins une cellule de mesure (1 ou 22) et un dispositif électronique de traitement de signaux (17, 18, 21 ; 25 à 30), caractérisé en ce que :

la cellule de mesure (1 ou 22) comporte un premier élément (5) sélectivement perméable aux ions qui est en contact avec la solution-échantillon (2), un second élément (6) sélectivement perméable aux ions qui est en contact avec une première solution-standard (3), et un troisième élément (7) sélectivement perméable aux ions qui est en contact avec une seconde solution-standard (4),

les trois éléments (5, 6, 7) sélectivement perméables aux ions ont, en ce qui concerne leur sélectivité ionique, un comportement électrochimique analogue ou identique et sont reliés galvaniquement entre eux de telle sorte qu'ils soient pratiquement au même potentiel, et

la solution-échantillon (2) est reliée galvaniquement avec une électrode de référence-échantillon (8), la première solution-standard (3) avec une première électrode de référence-standard (9) et la seconde solution-standard (4) avec une seconde électrode de référence-standard (10), les différentes électrodes de référence (8, 9, 10) comportant chacune une liaison de transmission de signaux au dispositif de traitement électronique de signaux (17, 18, 21 ; 25 à 30).

2. Appareil d'analyse électrochimique selon la revendication 1, caractérisé en ce que les éléments sélectivement perméables aux ions (5, 6, 7) sont des micro-capillaires formés de verre sensible aux ions.

3. Appareil d'analyse électrochimique selon la revendication 1 ou 2, caractérisé en ce qu'il est prévu, entre la solution-échantillon (2) et l'électrode de référence-échantillon (8) ainsi qu'entre les solutions-standard (3, 4) et leurs électrodes de référence-standard (9, 10), respectivement un électrolyte interne (33).

4. Appareil d'analyse électrochimique selon une des revendications précédentes, caractérisé par des moyens (20, 23, 24, 31, 32) à l'aide desquels la première et/ou la seconde solution-standard (3, 4 ; 11, 12) peut être déplacée de façon continue ou échelonnée au travers de l'élément sélectivement perméable aux ions (6, 7) qui lui est associé.

5. Appareil d'analyse électrochimique selon une des revendications précédentes, caractérisé en ce qu'il est prévu un électrolyte (16) pour la liaison galvanique des trois éléments (5, 6, 7) sélectivement perméables aux ions.

6. Appareil d'analyse électrochimique selon une des revendications précédentes 1 à 4, caractérisé en ce que les trois éléments (5, 6, 7) sélectivement perméables aux ions font partie d'un corps (13) électrochimiquement homogène.

7. Appareil d'analyse électrochimique selon une des revendications précédentes, caractérisé en ce que la solution-échantillon (2) et la première et la seconde solution-standard (3, 4) contiennent des ions $H^-$ ou des ions $Na^-$ ou des ions $K^-$.

8. Appareil d'analyse électrochimique selon une des revendications précédentes, caractérisé en ce que la composition des électrolytes internes (33) entre les électrodes de référence échantillon et standard correspondantes (8, 9, 10) est identique, ou approximativement identique, à la composition de la solution-échantillon (2) et de la solution-standard (3, 4) correspondantes.

9. Appareil d'analyse électrochimique selon une des revendications précédentes, caractérisé en ce qu'il est prévu au moins deux cellules de mesure (1 et 22) reliées galvaniquement entre elles par l'intermédiaire de la solution-échantillon (2) et comportant en commun une électrode de référence-échantillon (8) en contact avec la solution-échantillon (2).

10. Appareil d'analyse électrochimique selon une des revendications précédentes, caractérisé en ce qu'au moins une cellule de mesure (1, 22), comporte, pour la valeur de mesure correspondante et en vue d'une compensation d'erreur, une unité électronique de traitement de signaux (21) pourvue d'une unité de calcul (26, 29).

Fig.1

0 060 533

Fig. 2

0 060 533

Fig. 3